# EUROPÄISCHE PATENTANMELDUNG

(11) **EP 4 201 665 A1**
(43) Veröffentlichungstag der Anmeldung: **28.06.2023**
(21) Anmeldenummer: 21216490.9
(22) Anmeldetag: 21.12.2021
(51) Int. Cl.: B32B 5/02, B32B 9/02, B32B 21/00, B32B 27/08, B32B 27/12, B32B 27/28, B32B 27/32, B32B 27/36, H01M 10/658, H01M 50/24

(54) **VERBUNDMATERIAL ALS HITZE-, BRAND- UND/ODER RAUCHSCHUTZMATERIAL**

(71) Anmelder: nolax AG, 6203 Sempach Station (CH)
(72) Erfinder: Läpple, Markus, 89555 Steinheim (DE); Fuhrer, Dominik, 6010 Kriens (CH); Niederberger, Barbara, 6314 Unterägeri (CH); Hosotte, Claude, 68220 Michelbach le Haut (FR)
(74) Vertreter: Hepp Wenger Ryffel AG

(57) **Zusammenfassung**

Die Erfindung betrifft ein Verbundmaterial (1, 2, 3) als Hitze-, Brand- und/oder Rauchschutzmaterial, umfassend:
- ein erstes flächiges Substrat (12, 22, 32) enthaltend mindestens ein anorganisches, hochschmelzendes Material,
- ein zweites flächiges Substrat (14, 24, 34) enthaltend mindestens ein durchschusshemmendes Material,

Das erste flächige Substrat (12, 22, 32) und das zweite flächige Substrat (14, 24, 34) sind mit einer ersten temperaturbeständigen Polymerzusammensetzung (13, 23, 33), enthaltend mindestens ein vernetztes Polysiloxan, miteinander verklebt. Das erste flächige Substrat (12, 22, 32) ist mit einer zweiten temperaturbeständigen Polymerzusammensetzung (11, 21, 31) beschichtet oder ganz oder teilweise imprägniert. Die zweite Polymerzusammensetzung (11, 21, 31) enthält mindestens ein vernetztes Polysiloxan und vorzugswiese Metall-Pigmente.

## Beschreibung

Die Erfindung betrifft ein Verbundmaterial als Hitze-, Brand-und/oder Rauchschutzmaterial sowie ein Verfahren zum Herstellen eines solchen Verbundmaterials gemäss den Oberbegriffen der unabhängigen Ansprüche.

Batteriezellen, insbesondere in E-Fahrzeugen, aber auch in anderen Geräten, wie z.B. Mobiltelefonen oder Computern, können durch einen Impact überhitzen und einen Brand auslösen. Dieser Impact entsteht entweder durch eine mechanische Beschädigung der Batteriezelle, Batteriedefekt oder durch Überhitzung, die zu einem Schmelzen der Separatorfolien führt. In allen Fällen entsteht ein Kurzschluss (< 1 s), bei dem innerhalb weniger Sekunden sehr heisse und abrasive Gase und Flammen ausgestossen werden.

Um die Folgen eines solchen Impact abzumildern, wurden entsprechende Hitzeschilde entwickelt, die aus verschiedenen Verbundmaterialien bestehen. An solche Hitzeschilde werden spezielle Anforderungen gestellt. Eine Herausforderung ist dabei unter anderem der nur geringe zur Verfügung stehende Platz für einen solchen Hitzeschild. Um die Anforderungen der Automobilindustrie erfüllen zu können, sollte der Hitzeschild zumindest die folgenden Anforderungen erfüllen:
- geringe Dicke von < 3 mm,
- Hitzebeständigkeit bis zu 1300 °C kurzfristig (≤ 20 s),
- Hitzebeständigkeit bis zu 1000 °C bis zu 10 Minuten,
- kein elektrischer Durchschlag im Brandfall,
- Beständigkeit gegen abrasives Heissgas.

WO 2020/221808 A1 beschreibt beispielsweise einen Hitzeschild aus verschiedenen Lagen. Diese Lagen umfassen eine impaktabsorbierende Schicht, eine Hitzeschutzschicht aus einem hoch temperaturbeständigen Material, eine Schicht mit intumeszierenden Eigenschaften sowie eine Trägerplatte. Das intumeszierende Material zeigt unter Hitzeeinwirkung ein aufquellendes bzw. aufblähendes Verhalten und bildet infolge des Aufblähens eine Isolierschicht aus, die als Hitzebremse wirkt.

WO 2019/121641 A1 beschreibt ein mehrlagiges Gewebe als Wärmedämmelement, welches zumindest die Anforderungen an Temperaturstabilität und elektrische Isolation erfüllt. Das Gewebe ist genadelt, nicht geklebt. Bei abrasiven Heissgasen kann es seine Wirkung verlieren, insbesondere wenn der Verbund nur eine geringe Dicke aufweist.

DE 10 134 145 A1 beschreibt ein Batteriegehäuse, das gegen thermische Belastung widerstandsfähig sein soll. Das Batteriegehäuse ist dazu mit einem Material beschichtet, bei dem eine erhöhte Temperatur eine Phasenumwandlung bewirkt. Dadurch kann der Temperaturanstieg herausgezögert werden.

US 9 346 994 B2 beschreibt ein Hitzeschutzmaterial für Raumfahrzeuge. Dieses Material umfasst eine Mischung aus Kork, Harz und feuerfesten Fasern, vorzugsweise aus Aluminium.

US 2010/0086844 A1 beschriebt ein Batteriegehäuse, welches mit zwei Lagen intumeszierender Materialien unterschiedlicher Aktivierungstemperatur beschichtet ist.

WO 2018/018483 A1 beschreibt einen flexiblen Hitzeschutz aus einer Polyimidfolie und einer mit Blähgraphit intumeszierenden Beschichtung auf Basis von Silikonelastomeren. Da Blähgraphit elektrisch leitend ist, ist dieses Material nicht als Hitzeschild geeignet.

Weitere, im Stand der Technik bekannte, Verbunde nutzen u.a. Spezialpapier aus mineralischen Fasern (WO 2018/195303 A1) oder flammgeschützten Schaum mit einer Schicht aus anorganischen Fasern und einer Flammschutzbeschichtung (WO 2021/019495 A1).

Keine der im Stand der Technik bekannten Verbunde erfüllt jedoch alle oben genannten Mindestanforderungen.

Es ist daher eine Aufgabe der Erfindung, die Nachteile des Stands der Technik zu überwinden. Es ist insbesondere eine Aufgabe der Erfindung ein Verbundmaterial bereitzustellen, welches zumindest für einige Minuten eine Hitzebeständigkeit von über 1000°C aufweist, einen elektrischen Durchschlag verhindert, beständig gegenüber abrasiven Gasen ist und zudem noch eine geringe Dicke aufweist. Es ist auch eine Aufgabe der Erfindung, ein Verfahren zur Herstellung eines solchen Verbundmaterials bereitzustellen.

Ein erster Aspekt der Erfindung betrifft ein Verbundmaterial als Hitze-, Brand- und/oder Rauchschutzmaterial. Das Verbundmaterial umfasst:
- ein erstes flächiges Substrat enthaltend mindestens ein anorganisches, hochschmelzendes Material und
- ein zweites flächiges Substrat enthaltend mindestens ein durchschusshemmendes Material.

Das erste und das zweite flächige Substrat sind mit einer ersten temperaturbeständigen Polymerzusammensetzung, enthaltend mindestens ein vernetztes Polysiloxan, miteinander verklebt. Das erste flächige Substrat ist mit einer zweiten temperaturbeständigen Polymerzusammensetzung beschichtet oder ganz oder teilweise imprägniert. Die zweite Polymerzusammensetzung enthält mindestens ein vernetztes Polysiloxan und vorzugswiese Metall-Pigmente. Unter vernetztem Polysiloxan im Sinne dieser Erfindung ist ein Polysiloxan zu verstehen, welches aus Polymerisationsreaktionen, insbesondere Kondensationsreaktionen, von Silikonharz hervorgegangen ist.

Ein Silikonharz im Sinne dieser Erfindung ist zu vernetztem Polysiloxan aushärtbar; beim Silikonharz ist ein Teil der Silizium-Atome im Harz schon vor dem Aushärten wechselseitig über Sauerstoff-Atome in verzweigten Strukturen verbunden. Das Silikonharz ist hergestellt aus einer Vorvernetzungsreaktion von Oligosiloxanen, welche Einheiten der Formel

-(R₁R₂Si-O)ₙ-

umfassen, wobei R1 und R2 unabhängig voneinander für Hydrogen-, Hydroxy-, Alkoxy-, Alkyl-, Aryl-, Vinylgruppen stehen und n für eine natürliche Zahl zwischen 1 und 100, bevorzugt zwischen 5 und 60 steht. Bevorzugt weisen die Oligosiloxane an den Stellen R₁, R₂ zumindest teilweise reaktive Gruppen, insbesondere Hydrogen-, Hydroxy- und/oder Alkoxygruppen auf. Besonders bevorzugt weisen die Oligosiloxane an den Stellen R₁, R₂ zusätzlich zu den Hydrogen-, Hydroxy- und/oder Alkoxygruppen teilweise organische Seitengruppen, insbesondere Alkyl- und/oder Aryl-Seitengruppen, insbesondere Methyl- und/oder Phenyl-Seitengruppen oder Kombinationen davon auf. Das Silikonharz kann in Form einer Emulsion oder Dispersion vorliegen.

Die Dispersion oder Emulsion kann wasserbasiert sein. Unter "wasserbasiert" ist zu verstehen, dass es sich bei der kontinuierlichen Phase um Wasser handelt. Eine wasserbasierte Dispersion oder Emulsion kann gut in das Substrat eindringen, ist einfach handhabbar, gesundheits- und umweltschonend.

Die Hydroxy- und Alkoxygruppen des Silikonharzes können zusammen nach einer Kondensationsreaktion reagieren, was zu einer Nachvernetzung des Silikonharzes und somit zum Aushärten führt. Die Nachvernetzung erfolgt vorzugsweise unter Wärmezuführung, bevorzugt in einem Temperaturbereich zwischen 160 und 300 °C, besonders bevorzugt zwischen 180 und 260°C und ganz besonders bevorzugt zwischen 200 und 220°C. Durch eine derartige Nachvernetzung, insbesondere Nachvernetzung des Silikonharzes, wird eine besonders hohe Hitzebeständigkeit der Beschichtung erzielt.

Die Polymerzusammensetzung, aufweisend mindestens ein vernetztes Polysiloxan und vorzugsweise Metall-Pigmente, enthält bevorzugt ≥ 60 Gew.-%, besonders bevorzugt ≥ 70 Gew.-% und ganz besonders bevorzugt ≥ 80 Gew.-% vernetztes Polysiloxan.

Vernetzte Polysiloxane haben sich gegenüber alternativen Polymeren, beispielsweise silikonbasierten Elastomeren, als besonders hitzebeständig erwiesen.

Es hat sich überraschend gezeigt, dass die Temperaturfestigkeit des ersten und des zweiten Substrats durch die Polymerzusammensetzung erhöht wird und mehrere Minuten bei 1000°C übersteht, sogar kurzfristig (≤ 22 sec) bei 1300°C.

Ohne an eine Theorie gebunden zu sein, wird davon ausgegangen, dass sich die Polymerzusammensetzungen mit dem mindestens einen vernetzten Polysiloxan bei hohen Temperaturen in eine schützende Silikatschicht umwandelt und so die verbesserte Temperaturfestigkeit erreicht.

Die erste und zweite Polymerzusammensetzungen können somit drei Funktionen übernehmen: das Kleben, den Hitzeschutz und die elektrische Isolation. Somit kann auf den Einbau entsprechender Schichten verzichtet werden. Die in den bisherigen Patenten beschriebenen Intumeszenzschichten und/oder elektrischen Barrieren (Polyimidfolie, Glimmerpapier) werden überflüssig.

Das mindestens eine vernetzte Polysiloxan kann ein vernetztes Polysiloxan mit organischen Seitengruppen sein, wobei die Seitengruppen unabhängig voneinander sind und vorzugsweise ausgewählt sind aus der Gruppe bestehend aus Alkyl-, Aryl-, Hydrogen-, Hydroxy- und Alkoxy-, sowie Kombinationen hiervon. Bevorzugt weist das vernetzte Polysiloxan zumindest teilweise Seitenketten auf mit Phenylgruppen, Methylgruppen und/oder Kombinationen davon. Die Verwendung von Phenyl-Seitengruppen hat den Vorteil, dass eine besonders hohe Hitzebeständigkeit des beschichteten oder imprägnierten Substrats erzielbar ist. Zudem haben Phenylgruppen eine höhere Kompatibilität mit anderen Harzen und mit Füllstoffen. Die Polymerzusammensetzungen können Mischungen von zwei oder mehr Polysiloxanen enthalten.

Vorzugsweise kann die erste und/oder die zweite Polymerzusammensetzung wenigstens ein weiteres, vom vernetzten Polysiloxan abweichendes Polymer, aufweisen, vorzugswiese ausgewählt aus der Gruppe: Polyacrylat, Ethylen-Acrylsäure-Copolymer, Ethylen-Methacrylsäure-Copolymer, Styrol-Acrylat-Copolymer, Ethylen-Vinylacetat-Copolymer, Acrylat-Urethan-Copolymer, Polyurethan-Copolymer, Vinylchlorid-Ethylen-Copolymer, Vinylchlorid-Vinylacetat-Copolymer, Vinylchlorid-Vinylacetat-Ethylen Copolymer und Kombinationen davon. Das weitere Polymer kann in Form einer Co-Emulsion oder Co-Dispersion bereitgestellt worden sein.

Die Co-Dispersion oder Co-Emulsion kann wasserbasiert sein.

Eine bevorzugte zweite Polymerzusammensetzung, aufweisend mindestens ein vernetztes Polysiloxan, wenigstens ein weiteres Polymer und Metall-Pigmente, enthält bevorzugt zwischen 5 und 30 Gew.-% Anteile des wenigstens einen weiteren Polymers, besonders bevorzugt zwischen 10 und 20 Gew.-% Anteile.

Metallpigmente sind bevorzugt Aluminium-Pigmente. Denkbar sind auch Pigmente aus Chrom, Silber oder Kupfer, zusätzlich oder alternativ zu den Aluminium Pigmenten. Aluminium ist aufgrund des geeigneten Schmelzpunktes und wirtschaftlicher Überlegungen bevorzugt. Metall-Pigmente haben den Vorteil, dass sie eine hohe Hitzestabilität aufweisen. Sie können eine zusätzliche Hitzereflexion bewirken.

Die Metall-Pigmente können plättchen- oder flockenförmig sein und/oder in der Fläche einen maximalen Durchmesser von 1 bis 100 µm, bevorzugt 5 bis 45 µm, aufweisen, bestimmbar durch Siebanalyse. Bevorzugt werden die Metall-Pigmente vom non-leafing Typ verwendet, die sich gleichmässig in der Filmmatrix verteilen. Bevorzugt werden die Metall-Pigmente in Form einer VOCfreien Paste für wässrige Systeme verwendet.

Das erste flächige Substrat kann mit einer zweiten Polymerzusammensetzung beschichtet oder ganz oder teilweise imprägniert sein, die bevorzugt Metall-Pigmente enthält in einem Mindest-Anteil an der Polymerzusammensetzung von 7 Gew.-%, bevorzugt zwischen 10 und 25 Gew-%, besonders bevorzugt zwischen 12 und 20 Gew.-%. Ein relativ hoher Anteil an Metall-Pigmenten kann die Hitzebeständigkeit des Hitze-, Brand- und Rauchschutzmaterials besser gewährleisten.

Das zweite flächige Substrat kann ein Gewebe sein und das Gewebe kann vorzugsweise ausgewählt sein aus der Gruppe: Glasfasern, bevorzugt E-Glas, R-Glas, S-Glas, ECR-Glas; Preox; Aramid; Silikatfasern; Basalt; Kevlar; Wolle, bevorzugt Aluminiumsilikatwolle; Flachs; Phenolfasern; Polybenzimidazolfasern; Polyimidfasern; und Kombinationen davon. Ganz besonders bevorzugt ist eine Kombination aus Aramid, Preox und Glasfaser.

E-Glas (E = Electric) bezeichnet dabei Aluminiumborsilikat-Glas mit weniger als 2 % Alkalioxiden. Dies gilt als Standardfaser für allgemeine Kunststoffverstärkung und für elektrische Anwendungen.

S-Glas (S = Strength) bezeichnet Aluminiumsilikat-Glas mit Zusätzen von Magnesiumoxid. Dieses Glas hält hohen mechanischen Anforderungen auch bei hohen Temperaturen stand.

R-Glas (R = Resistance) bezeichnet Aluminiumsilikat-Glas mit Zusätzen von Calcium- und Magnesiumoxid. Dieses Glas hält hohen mechanischen Anforderungen auch bei hohen Temperaturen stand.

ECR-Glas (E-Glass Corrosion Resistant) beinhaltet Fasern mit besonders hoher Korrosionsbeständigkeit.

Aluminiumsilikatwolle, auch als Keramikfasern (englisch Refractory Ceramic Fiber = RCF) bekannt, sind amorphe Fasern, die durch Schmelzen einer Kombination von Al₂O₃ und SiO₂, üblicherweise im Gewichtsverhältnis 50:50 hergestellt werden.

Das Gewebe zeichnet sich durch gute durchschusshemmende Wirkung aus und dient so als Partikelfänger.

Alternativ kann das zweite flächige Substrat Holz und/oder Kork als durchschusshemmendes Material aufweisen. Es ist auch denkbar eine Naturfasermatte oder Furnier einzusetzen.

Es ist auch möglich, das zweite flächige Substrat als einen Verbund aus einer Lage Glasfasern und einer Lage Holz und/oder Kork bereitzustellen.

Das erste flächige Substrat ist vorzugsweise ein von dem zweiten flächigen Substrat abweichendes Gewebe und das Gewebe vorzugsweise ausgewählt aus der Gruppe: Silikatfaser; E-Glass; R-Glas; ECR-Glas; Basalt; Steinwolle und Kombinationen davon.

Das erste flächige Substrat stellt die erste Barriere gegenüber heissen Flammen dar. Die zweite, Polysiloxan umfassende, Polymerzusammensetzung bildet in der Hitze eine erste - u.a. auch elektrisch isolierende - Silikatschicht aus, so dass das erste flächige Substrat hohen Temperaturen über 1000 °C für einige Minuten standhalten kann. Ebenso bildet sich aus der als Klebstoff zwischen den beiden Substraten wirkenden ersten Polymerzusammensetzung eine Silikatschicht aus, welche das zweite flächige Substrat zusätzlich schützt.

Das Verbundmaterial wie vorhergehend beschrieben kann beispielsweise in einem Batteriegehäuse oder zwischen einem Batteriegehäuse und der Umgebung eingelegt sein oder an ein Batteriegehäuse befestigt sein.

Für eine Befestigung ist das zweite flächige Substrat vorzugsweise mit einem Metall-Haftklebstoff zur Befestigung des Verbundmaterials an einem Metall versehen. Vorzugsweise eignet sich dazu ein drucksensitiver Klebstoff (pressure sensitive adhesive PSA). Beispielsweise kann der Klebstoff ein Klebstoff auf Basis einer wässrige Acrylat-Dispersion sein. Alternativ sind auch andere Haftklebstoffe mit guter Metallhaftung denkbar, beispielsweise Silikonblockpolymer; oder 1-Komponten- und 2-Komponenten-Polyurethan-Systeme; Klebefolie, z.B. gepfropfte Polyolefine; oder 1-Komponenten- und 2-Komponenten-Epoxy-Systeme.

Solche Klebstoffe ermöglichen eine Verbindung zwischen dem zweiten flächigen Substrat, besonders dem durchschusshemmenden Material, und zum Metall, vorzugsweise Aluminium.

Es kann vorteilhaft sein, wenn auf die zweite Polymerzusammensetzung eine Polymerfolie, vorzugsweise eine Polymerfolie aus Polypropylen (PP), Polyethylen (PE), Polyethylenterephthalat (PET) oder Polyimid (PI); oder eine Mehrschichtfolie aufgebracht ist. Solche Folien wirken zusätzlich elektrisch isolierend. Die genannten Polymere besitzen eine Durchschlagfestigkeit von > 5 kV/mm.

Besonders bevorzugt ist eine Mehrschichtfolie, die auf der Aussenseite die oben genannten Polymere aufweist und an der Innenseite, also der zweiten Polymerzusammensetzung zugewandten Seite, eine klebefreundliche Schicht aufweist. Eine solche Klebfreundliche Schicht kann aus Copolyester (Co-PES), Polyamid (PA) und/oder thermoplastischem Polyurethan (TPU) sein.

Die Polymerfolie weist vorzugsweise eine Dicke zwischen 5 und 500 µm, besonders bevorzugt zwischen 10 und 200 µm und ganz besonders bevorzugt zwischen 20 und 100 µm auf.

Zum Schutz gegen elektrischen Durchschlag können auch andere Isolationsmaterialien verwendet werden, beispielsweise Glimmerpapier oder Keramikfolien. Aus wirtschaftlichen Gründen ist eine Polymerfolie bevorzugt.

Das Verbundmaterial kann mindestens zwei erste und zwei zweite flächige Substrate aufweisen. Es sind auch mehrere erste und mehrere zweite flächige Substrate denkbar, die mit den entsprechenden Polymerzusammensetzungen verbunden sind. Grundsätzlich kann durch Erhöhung der Lagen eine Erhöhung der Performance erreicht werden. Limitiert wird die Anzahl der Lagen lediglich durch die für einen Einbau maximal mögliche Gesamtdicke, beispielsweise eine Gesamtdicke des Verbundes, die noch in einem Batteriekasten Platz findet.

Vorzugswiese weist das Verbundmaterial eine Dicke zwischen 1 bis 5 mm, bevorzugt zwischen 2 bis 2.7 mm, auf. Das Verbundmaterial zeichnet sich somit durch eine geringe Dicke aus, die einen Einbau in nahezu allen Geräten ermöglicht.

Das Verbundmaterial kann eine Hitzebeständigkeit von mindestens 20 Sekunden bei 1300°C aufweisen, längerfristig (ca. 10 min) bei 1000°C. Beispielsweise wurde gefunden, dass die Temperaturfestigkeit von Aramid (Zersetzungstemperatur 550°C) und Preox (Zersetzungstemperatur 900°C) mit einer Kombination der ersten Polymerzusammensetzung ansteigt und mehrere Minuten bei 1000°C übersteht. Die Polymerzusammensetzung wirkt hier nicht nur als Klebstoff, sondern wandelt sich hier ebenfalls bei hohen Temperaturen in eine schützende Silikatschicht um. Das durchschusshemmende Material behält somit seine Eigenschaften als Partikelfänger und kann glühende Metallpartikel abfangen.

Die Hitzebeständigkeit kann nach der Volkswagen Prüfnorm TDO V03.986.764.A «Überprüfung von Brandschutzmaterialien für Hochvolt Batteriesysteme» überprüft werden. Dabei wird ein Feuerwerkskörper Weco Bühnen Fontaine, in einem Abstand von 2-3 cm Distanz zum Prüfling abgebrannt. Die entstehende Hitze und der starke Austritt der Metallpartikel erzeugen bei ca. 1300°C eine Art Plasma, welches zum abrasiven Zerstören des Hitzeschutzmaterials führt.

Ein zweiter Aspekt der Erfindung betrifft ein Verfahren zum Herstellen eines Verbundmaterials, vorzugsweise eines Verbundmaterials wie vorhergehend beschrieben. Das Verfahren umfasst die Schritte:
a) Kaschieren eines ersten flächigen Substrats und eines zweiten flächigen Substrats mit einer ersten Polymerzusammensetzung enthaltend ein Silikonharz zum Erhalt eines Verbundmaterials,
b) Trocknen des Verbundmaterials aus Schritt a),
c) Beschichten des Verbundmaterials mit einer zweiten Polymerzusammensetzung umfassend eine Dispersion oder Emulsion aus einem Silikonharz und optional ein vom Silikonharz abweichendes Polymer und optional Metall-Pigmente,
d) Vernetzen der zweiten Polymerzusammensetzung bei erhöhter Temperatur zu einem vernetzten Polysiloxan, vorzugsweise durch Kondensationsreaktion.

Die erste und die zweite Polymerzusammensetzung können Polymerzusammensetzungen wie vorhergehend beschrieben sein. Bevorzugt ist eine zweite Polymerzusammensetzung als Dispersion, besonders bevorzugt wasserbasiert.

Das Kaschieren mit der ersten Polymerzusammensetzung in Schritt a) erfolgt bevorzugt mit einem Auftragsgewicht trocken von 20 bis 500 g/m², bevorzugt 50 bis 200 g/m² und ganz besonders bevorzugt 80-100 g/m² der Polymerzusammensetzung. Das Auftragen kann mittels Walze, Rakel, Schablone oder Spray erfolgen.

Das Trocknen in Schritt b) kann bei 20 bis 150°C, vorzugsweise 50 bis 120°C und besonders bevorzugt 80 bis 100°C erfolgen, beispielsweise in einem Umlufttrockner, Spannrahmen oder Tragbandtrockner.

Die Beschichtung in Schritt c) kann mit einem Auftragsgewicht trocken von 20 bis 200 g/m², bevorzugt 40 bis 120 g/m² und ganz besonders bevorzugt 60 bis 80 g/m² der Polymerzusammensetzung erfolgen. Das Auftragen kann mittels Walze, Rakel, Schablone oder Spray erfolgen.

Das Verfahren ermöglicht eine kosteneffiziente und schnelle Herstellung eines Verbundmaterials, das sich als Hitze-, Brand-und/oder Rauchschutzmaterial eignet.

Die Vernetzung in Schritt d) kann bei 160 bis 300 °C, vorzugswiese bei 180 bis 260 °C und besonders bevorzugt bei 200 bis 220°C durchgeführt werden. Bevorzugt findet die Vernetzung zwischen 1 und 60 min, bevorzugt zwischen 10 und 30 min und besonders bevorzugt für 4 min statt. Als besonders vorteilhaft hat sich eine Vernetzung bei 205 °C für 4 min erwiesen. Nach dieser Zeit hat sich eine gute Trennfestigkeit aufgebaut. Ein unnötig hoher Energieeintrag und somit zusätzliche Prozesskosten können somit vermieden werden.

Das Verbundmaterial kann mit einem, vorzugsweise drucksensitiven, Metall-Haftklebstoff zum Verkleben mit Metall kaschiert werden, vorzugsweise nach Schritt d). Der Metall-Klebstoff kann ein Klebstoff wie vorhergehend beschrieben sein. Das Kaschieren kann beispielsweise beim Aufrollen des Verbundmaterials oder in einem separaten Schritt erfolgen. Es ist möglich das Kaschieren mittels Flachbettpresse oder Kalander bei 150 bis 250 °C, bevorzugt 180 bis 220 °C und besonders bevorzugt 190 bis 210 °C sowie bevorzugt bei einer Kontaktzeit von 5 bis 60 Sekunden, besonders bevorzugt 5 bis 30 Sekunden und ganz besonders bevorzugt 10 bis 15 Sekunden und 10 bis 500 DaN, bevorzugt 200 bis 500 DaN und besonders bevorzugt 250 bis 350 DaN Druck durchzuführen. Vorteilhafterweise kann auf die zweite Polymerzusammensetzung eine Polymerfolie aufgebacht werden, vorzugsweise gepresst oder kaschiert. Die Folie kann z.B. auf einer Presse oder Kaschieranlage aufgebracht werden. Die Folie kann bei 60 bis 250 °C, bevorzugt 100 bis 200 °C und besonders bevorzugt 160 bis 200 °C und bei Kontaktzeiten von 1 bis 300 Sekunden, vorzugsweise 5 bis 100 Sekunden und besonders bevorzugt 8 bis 20 Sekunden sowie Druck von 10 bis 500 DaN, bevorzugt 200 bis 500 DaN und ganz besonders bevorzugt 250 bis 350 DaN aufgebracht werden.

Ein dritter Aspekt der Erfindung betrifft die Verwendung eines Verbundmaterials wie vorhergehend beschrieben als Hitze-, Brand-und/oder Rauchschutzmaterial, insbesondere für elektrische Geräte und ganz besonders Batterien. Insbesondere eignen sich die vorherstehenden Verbundmaterialien für Batterien in E-Fahrzeugen, aber auch Computern oder Mobiltelefonen, Tablets und dergleichen.

Die Erfindung wird anhand von Beispielen und Figuren näher erläutert. Diese Beispiele sind nicht limitierend zu verstehen und stellen lediglich bevorzugte Ausführungsformen dar.

### Es zeigen:

- Figur 1:: Einen Schichtaufbau eines ersten erfindungsgemässen Verbundmaterials,
- Figur 2:: einen Schichtaufbau eines zweiten erfindungsgemässen Verbundmaterials,
- Figur 3:: einen Schichtaufbau eines dritten erfindungsgemässen Verbundmaterials
- Figur 4:: zeigt exemplarisch den Temperaturverlauf unmittelbar an einer Austrittsstelle im Vergleich zu der Temperatur hinter einem erfindungsgemässen Verbundmaterial.

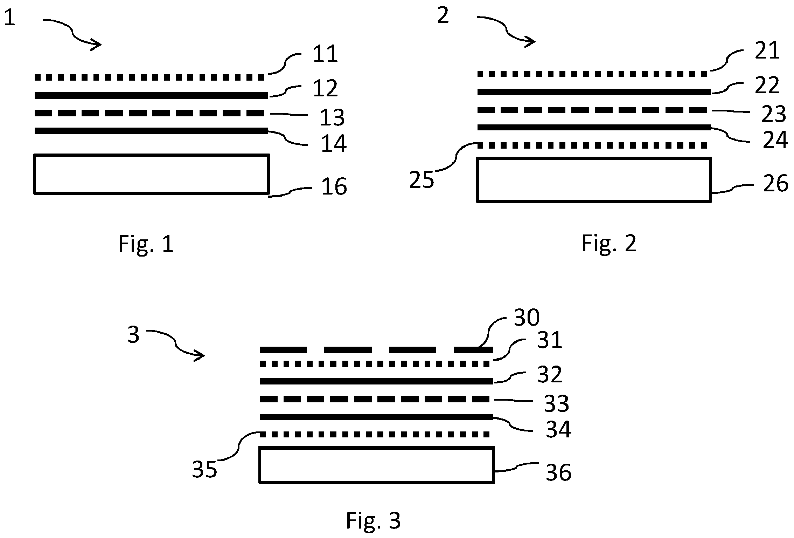

Figur 1 zeigt einen Schichtenaufbau eines ersten erfindungsgemässen Verbundmaterials 1. Das Verbundmaterial 1 umfasst eine Polymerzusammensetzung 11, ein flächiges anorganisches und hochschmelzendes Material 12, eine weitere Polymerzusammensetzung 13, und ein flächiges Substrat aus einem durchschlaghemmenden Material 14. Der Verbund 1 ist nicht fest mit einem Batteriegehäuse 16 verbunden.

Figur 2 zeigt einen Schichtenaufbau eines zweiten erfindungsgemässen Verbundmaterials 2. Das Verbundmaterial 2 umfasst eine Polymerzusammensetzung 21, ein flächiges anorganisches und hochschmelzendes Material 22, eine weitere Polymerzusammensetzung 23, und ein flächiges Substrat aus einem durchschlaghemmenden Material 24. Der Verbund 2 ist über einen Metall-Haftklebstoff 25 fest mit einem Batteriegehäuse 26 verbunden.

Figur 3 zeigt einen Schichtenaufbau eines dritten erfindungsgemässen Verbundmaterials 3. Das Verbundmaterial 3 umfasst eine Polymerzusammensetzung 31, ein flächiges anorganisches und hochschmelzendes Material 32, eine weitere Polymerzusammensetzung 33, und ein flächiges Substrat aus einem durchschlaghemmenden Material 34. Der Verbund 3 ist über einen Metall-Haftklebstoff 35 fest mit einem Batteriegehäuse 36 verbunden. Zusätzlich ist an der Aussenseite eine Polymerfolie 30 aufgebracht.

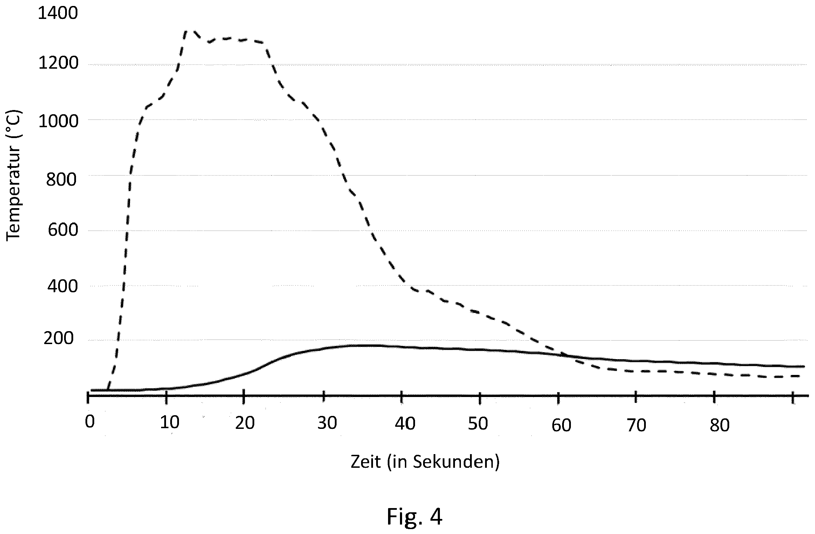

Figur 4 zeigt exemplarisch den Temperaturverlauf unmittelbar an einer Austrittsstelle des Impacts in der Batterie (gestrichelte Linie) im Vergleich zu der Temperatur hinter einem erfindungsgemässen Verbundmaterial (durchgezogene Linie). Währen der Temperaturverlauf einer durchbrennenden Li-Batterie (gestrichelte Linie) in den ersten Sekunden eine extreme Temperaturbelastung und einen abrasiven Heissgasstrahl erfährt, überlebt der Verbund die erste Phase und die durchgezogene Linie zeigt, dass die Rückseite genügend kalt (< 200°C) bleibt. Die Verbunde erfüllen die Anforderung an einen Hitzeschutz.

### Materialien

Heares A31.3201: Film auf Transferpapier, hergestellt aus einer wässrigen Acrylat-Dispersion;
Heares A36.3202: wässrige Dispersion aus Silikonharz mit Ethylen-Acrylsäure Copolymer;
Heares A36.3208: wässrige Dispersion aus Silikonharz mit Acrylat-Dispersion;
Heares A36.3210: wässrige Dispersion aus Silikonharz mit Acrylat-Dispersion, zusätzlich Aluminiumpulver;
Nolax 45.200: Zweischichtfolie aus Polyethylen und Copolyamid. Die Copolyamidseite zeigt zur Heares Beschichtung.
Silika 600: Silikatfasergewebe RSG 600, Flächengeweicht 600 g/m², Faserdurchmesser > 6 µm;
Silika 1100: Silikatfasergewebe RSG 1100, Flächengeweicht 1100 g/m², Faserdurchmesser > 6 µm;
ACG 650: Aramid/Preox/Glas-Mischgewebe, 500 g/m², 25% p-Aramid, 25% Preox, 50% E-Glas;
ACG 500: Aramid/Preox/Glas-Mischgewebe, 500 g/m², 46% p-Aramid, 24% Preox, 30% E-Glas;
AC 260: Aramid/Preox-Mischgewebe, 260 g/m², 50% p-Aramid, 50% Preox;
KAT 1300 P: Silikat Fasergewebe aus 98% SiO₂, Breite 1000 mm, 1300 g/m², Leinwandbindung, Faserdurchmesser >6 µm, käuflich erhältlich bei der Firma Valmiera Glass Group, LV 4201 Valmiera; CBG BW: Basaltfasergewebe, Flächengewicht 390 g/m² Faserdurchmesser > 6 µm, käuflich erhältlich bei der Firma CBG Composites GmbH, 51688 Wipperfürth, Deutschland.
Nachfolgend wird der Aufbau verschiedener erfindungsgemässer Verbunde exemplarisch beschrieben und gezeigt.

### Verbund 1

Silikat 1100 wurde mit ACG 650 und 150 - 180 g/m² Trockengewicht HEARES A36.3202 kaschiert. Der Auftrag erfolgte auf einem Rakeltisch mit einem Spiralrakel. Anschliessend wurde der Verbund bei 100 °C und 300 s im Ofen getrocknet. Der getrocknete Verbund wurde mit HEARES A36.3210 von 50 - 70 g/m² (Trockengewicht) beschichtet. Der Auftrag erfolgte auf einem Rakeltisch mit einem Spiralrakel. Die Polymerzusammensetzung wurde zuerst während 5 min bei 100 °C getrocknet und anschliesssend während 4 min bei 205 °c vernetzt. Anschliessend wurde HEARES A31.3201 mit 70 g/m² (Trockengewicht) auf die ACG 650-Schicht aufgetragen und auf einer Stempelpresse bei 200°C für 10 s bei 350 DaN fixiert.

Es wurde ein Verbundmaterial mit folgender Schichtenreihenfolge erhalten:

| | |
|---|---|
| Schicht 1: | HEARES A36.3210 (50 - 70 g/m² trocken) |
| Schicht 2: | Silikat 1100 |
| Schicht 3: | HEARES A36.3202 (150 - 180 g/m² trocken) |
| Schicht 4: | ACG 650 |
| Schicht 5: | HEARES A31.3201 70 g/m² |

Verbund 1 hatte eine Gesamtdicke von 2.7 mm

### Verbund 2

KAT 1300P Silikat wurde mit Basalt und 150 - 180 g/m² Trockengewicht HEARES A36.3202 kaschiert. Der Auftrag erfolgte auf einem Rakeltisch mit einem Spiralrakel. Anschliessend wurde der Verbund bei 100 °C und 300 s im Ofen getrocknet. Der getrocknete Verbund wurde mit HEARES A36.3210 von 50 - 70 g/m² (Trockengewicht) auf einem Rakeltisch mit einem Spiralrakel beschichtet. Die Polymerzusammensetzung wurde zuerst während 5 min bei 100 °C getrocknet und anschliesssend während 4 min bei 205 °c vernetzt. Anschliessend wurde HEARES A31.3201 mit 70 g/m² (Trockengewicht) auf die Basalt-Schicht aufgetragen und auf einer Stempelpresse bei 200°C für 10 s bei 350 DaN fixiert.

Es wurde ein Verbundmaterial mit folgender Schichtenreihenfolge erhalten:

| | |
|---|---|
| Schicht 1: | HEARES A36.3210 (50 - 70 g/m² trocken) |
| Schicht 2: | KAT 1300P Silikat |
| Schicht 3: | HEARES A36.3202 (150 - 180 g/m² trocken) |
| Schicht 4: | Basalt |
| Schicht 5: | HEARES A31.3201 70 g/m² |

Verbund 2 hat eine Gesamtdicke von 2.6 mm.

### Verbund 3

Silikat 600 wurde mit ACG 500 und 150 - 180 g/m² (Trockengewicht) HEARES A36.3202 kaschiert. Der Auftrag erfolgte auf einem Rakeltisch mit einem Spiralrakel. Anschliessend wurde der Verbund bei 100 °C und 300 s im Ofen getrocknet. Der getrocknete Verbund wurde mit HEARES A36.3208 von 80 - 100 g/m² (Trockengewicht) auf einem Rakeltisch mit einem Spiralrakel beschichtet. Die Polymerzusammensetzung wurde zuerst während 5 min bei 100 °C getrocknet und anschliesssend während 4 min bei 205 °c vernetzt. Anschliessend wurde HEARES A31.3201 mit 70 g/m² (Trockengewicht) auf die ACG 500-Schicht aufgetragen und auf einer Stempelpresse bei 200°C für 10 s bei 350 DaN fixiert. Auf das Verbundmaterial wurde anschliessend ein PA/PE-Folie von 75 g/m² auf einer Stempelpresse bei 180°C für 10 s bei 350 DaN aufgebracht.

Es wurde ein Verbundmaterial mit folgender Schichtenreihenfolge erhalten:

| | |
|---|---|
| Schicht 0: | Nolax 45.200 (PA/PE-Folie 75 g/m²) |
| Schicht 1: | HEARES A36.3208 (80 - 100 g/m² trocken) |
| Schicht 2: | Silikat 600 |
| Schicht 3: | HEARES A36.3202 (150 - 180 g/m² trocken) |
| Schicht 4: | ACG 500 |
| Schicht 5: | HEARES A31.3201 70 g/m² |

Verbund 3 hat eine Gesamtdicke von 2.1 mm.

### Verbund 4

Silikat 1100 wurde mit AC 260K und 150 - 180 g/m² (Trockengewicht) HEARES A36.3202 kaschiert. Der Auftrag erfolgte auf einem Rakeltisch mit einem Spiralrakel. Anschliessend wurde der Verbund bei 100 °C und 300 s im Ofen getrocknet. Der getrocknete Verbund wurde mit HEARES A36.3208 von 80 - 100 g/m² (Trockengewicht) auf einem Rakeltisch mit einem Spiralrakel beschichtet. Die Polymerzusammensetzung wurde zuerst während 5 min bei 100 °C getrocknet und anschliesssend während 4 min bei 205 °c vernetzt. Anschliessend wurde HEARES A31.3201 mit 70 g/m² (Trockengewicht) auf die ACG 500-Schicht aufgetragen und auf einer Stempelpresse bei 200°C für 10 s bei 350 DaN fixiert. Auf das Verbundmaterial wurde anschliessend ein PA/PE-Folie von 75 g/m² auf einer Stempelpresse bei 180°C für 10 s bei 350 DaN aufgebracht.

Es wurde ein Verbundmaterial mit folgender Schichtenreihenfolge erhalten:

| | |
|---|---|
| Schicht 0: | Nolax 45.200 (PA/PE-Folie 75 g/m²) |
| Schicht 1: | HEARES A36.3208 (80-100 g/m² trocken) |
| Schicht 2: | Silikat 1100 |
| Schicht 3: | HEARES A36.3202 (150 - 180 g/m² trocken) |
| Schicht 4: | AC 260K |
| Schicht 5: | HEARES A31.3201 70 g/m² |

Verbund 4 hat eine Gesamtdicke von 1.9 mm.

### Durchbrennzeiten

Beim Durchbrennen einer Batterie werden auch glühende Kupfer-und Aluminiumpartikel mit Temperaturen von 600 - 1100°C ausgestossen, welche sehr abrasiv sind. Das Verhalten gegenüber solchen Teilchen wurde im Plasmatreatment Test nach VW-Norm TDO V03.986.764.A 2021.05 geprüft. Bei diesem Test wurden ein definierter Feuerwerkskörper gezündet und die Durchbrennzeit gemessen.

In der folgenden Tabelle sind die Durchbrennzeiten der einzelnen Substrate ohne Verbund dargestellt:

| **Substrate** | **Zeit bis Durchbrennen** |
|---|---|
| Silikat Gewebe 1100 | 6 s |
| Silikat Gewebe 600 | 5 s |
| Aramid/Preox/Glasgewebe ACG650 | 5 s |
| Aramid/Preox/Glasgewebe ACG500 | 4 s |
| Aramid/Preox/Glasgewebe AC260K | 3 s |
| KAT-1300P | 8 s |
| Basaltgewebe | 2 s |
| Aluminiumplatte 1.2 mm | 2 s |

Im Gegensatz zu den Durchbrennzeiten der einzelnen Substrate, hat sich überraschend gezeigt, dass die Verbunde den Flammen deutlich länger Stand halten, weit über eine blosse Addition der obigen Werte hinaus. Beispielhaft wurde Verbund 1 nach dieser Norm geprüft und hielt mit einer Durchbrennzeit von > 22 Sekunden stand. Die Verbunde 3 und 4 sind Weiterentwicklungen, wo ein erhöhter Anteil an Heares Klebstoff die Gewebe besser schützt, so dass der Gesamtverbund dünner ausgestaltet werden kann. Verbund 4 überschreitet ebenfalls 20 die geforderten Sekunden.

| **Substrate** | **Zeit bis Durchbrennen** |
|---|---|
| Verbund 1 | > 22 s |
| Verbund 2 | 14 s |
| Verbund 3 | 13 s |
| Verbund 4 | > 22 s |

### Durchschlagtest

Der Verbund 1 wurde auch auf die Durchschlagfestigkeit nach IEC 60243-1 (2013) geprüft. Gefordert werden von VW 4.7 kV für den Verbund und 0.8 KV nach einer 15 minütigen Lagerung bei 1000°C. Der Verbund 1 erfüllte diese Anforderungen mit 4.8 kV, resp 2.7 kV. Um die Durchschlagfestigkeit zu erhöhen, bei gleichzeitiger Reduktion der Verbunddicke, wurde in den Verbunden 3 und 4 eine Polymerfolie aufkaschiert, welche die elektrische Isolation erhöhte.

## Patentansprüche

1. Verbundmaterial (1, 2, 3) als Hitze-, Brand- und/oder Rauchschutzmaterial, umfassend:
- ein erstes flächiges Substrat (12, 22, 32) enthaltend mindestens ein anorganisches, hochschmelzendes Material,
- ein zweites flächiges Substrat (14, 24, 34) enthaltend mindestens ein durchschusshemmendes Material,
wobei das erste flächige Substrat (12, 22, 32) und das zweite flächige Substrat (14, 24, 34) mit einer ersten temperaturbeständigen Polymerzusammensetzung (13, 23, 33), enthaltend mindestens ein vernetztes Polysiloxan, miteinander verklebt sind,
**dadurch gekennzeichnet, dass** das erste flächige Substrat (12, 22, 32) mit einer zweiten temperaturbeständigen Polymerzusammensetzung (11, 21, 31) beschichtet oder ganz oder teilweise imprägniert ist und wobei die zweite Polymerzusammensetzung (11, 21, 31) mindestens ein vernetztes Polysiloxan und vorzugswiese Metall-Pigmente enthält.

2. Verbundmaterial (1, 2, 3) nach Anspruch 1, wobei die erste (13, 23, 33) und/oder die zweite (11, 21, 31) Polymerzusammensetzung wenigstens ein weiteres, vom mindestens einen vernetzten Polysiloxan abweichendes Polymer, aufweist, vorzugswiese ausgewählt aus der Gruppe: Polyacrylat, Ethylen-Acrylsäure-Copolymer, Ethylen-Methacrylsäure-Copolymer, Styrol-Acrylat-Copolymer, Ethylen-Vinylacetat-Copolymer, Acrylat-Urethan-Copolymer, Polyurethan-Copolymer, Vinylchlorid-Ethylen-Copolymer, Vinylchlorid-Vinylacetat-Copolymer, Vinylchlorid-Vinylacetat-Ethylen Copolymer und Kombinationen davon.

3. Verbundmaterial (1, 2, 3) nach einem der vorherigen Ansprüche, wobei das zweite flächige Substrat (14, 24, 34) ein Gewebe ist und das Gewebe vorzugsweise ausgewählt ist aus der Gruppe: Glasfasern, bevorzugt E-Glas, R-Glas, ECR-Glas; Preox; Aramid; Silikatfasern; Basalt; Kevlar; Wolle, bevorzugt Aluminiumsilikatwolle; Flachs; Phenolfasern; Polybenzimidazolfasern; Polyimidfasern; und Kombinationen davon.

4. Verbundmaterial (1, 2, 3) nach einem der Ansprüche 1 oder 2, wobei das zweite flächige Substrat (14, 24, 34) Holz und/oder Kork aufweist.

5. Verbundmaterial (1, 2, 3) gemäss einem der vorherigen Ansprüche, wobei das erste flächige Substrat (12, 22, 32) ein von dem zweiten flächigen Substrat (14, 24, 34) abweichendes Gewebe ist und das Gewebe vorzugsweise ausgewählt ist aus der Gruppe: Silikatfaser; E-Glas; R-Glas; ECR-Glas; Basalt; Steinwolle und Kombinationen davon.

6. Verbundmaterial (1, 2, 3) nach einem der vorherigen Ansprüche wobei das zweite flächige Substrat (14, 24, 34) mit einem Metall-Haftklebstoff (25, 35) zur Befestigung des Verbundmaterials (1, 2, 3) an einem Metall (16, 26, 36) versehen ist.

7. Verbundmaterial (1, 2, 3) nach einem der vorherigen Ansprüche, wobei auf die zweite Polymerzusammensetzung (11, 21, 31) eine Polymerfolie (30), vorzugsweise eine Polymerfolie aus Polypropylen (PP), Polyethylen (PE), Polyethylenterephthalat (PET) oder Polyimid (PI); oder eine Mehrschichtfolie aufgebracht ist.

8. Verbundmaterial (1, 2, 3) nach Anspruch 7, wobei die Polymerfolie (30) eine Dicke zwischen 5 und 500 µm, vorzugsweise zwischen 10 und 200 µm und ganz besonders bevorzugt zwischen 20 und 100 µm aufweist

9. Verbundmaterial (1, 2, 3) nach einem der vorherigen Ansprüche, wobei das Verbundmaterial (1, 2, 3) mindestens zwei erste (12, 22, 32) und zwei zweite (14, 24, 34) flächige Substrate aufweist.

10. Verbundmaterial (1, 2, 3) nach einem der vorherigen Ansprüche, wobei das Verbundmaterial (1, 2, 3) eine Dicke zwischen 1 bis 5 mm, vorzugsweise zwischen 2 bis 2.7 mm, aufweist.

11. Verbundmaterial (1, 2, 3) nach einem der vorherigen Ansprüche, wobei das Verbundmaterial (1, 2, 3) eine Hitzebeständigkeit von mindestens 20 Sekunden bei 1300°C aufweist.

12. Verfahren zum Herstellen eines Verbundmaterials (1, 2, 3), vorzugsweise eines Verbundmaterials (1, 2, 3) nach einem der Ansprüche 1 bis 11, umfassend die Schritte:
a) Kaschieren eines ersten flächigen Substrats (12, 22, 32) und eines zweiten flächigen Substrats (14, 24, 34) mit einer ersten Polymerzusammensetzung (13, 23, 33) enthaltend mindestens ein Silikonharz zum Erhalt eines Verbundmaterials,
b) Trocknen des Verbundmaterials aus Schritt a),
c) Beschichten des Verbundmaterials mit einer zweiten Polymerzusammensetzung (11, 21, 31) umfassend eine Dispersion oder Emulsion aus mindestens einem Silikonharz und optional ein vom mindestens einen Silikonharz abweichendes Polymer und optional Metall-Pigmente,
d) Vernetzen der zweiten Polymerzusammensetzung (11, 21, 31) bei erhöhter Temperatur zu mindestens einem vernetzten Polysiloxan, vorzugsweise durch Kondensationsreaktion.

13. Verfahren nach Anspruch 12, wobei Schritt d) bei 160 bis 300 °C, vorzugswiese bei 180 bis 260 °C und besonders bevorzugt bei 200 bis 220°C durchgeführt wird.

14. Verfahren nach Anspruch 12 oder 13, wobei das Verbundmaterial (1, 2, 3) mit einem Metall-Haftklebstoff (25, 35) zum Verkleben mit Metall (16, 26, 36) kaschiert wird.

15. Verfahren nach einem der vorherigen Ansprüche, wobei auf die zweite Polymerzusammensetzung (11, 21, 31) eine Polymerfolie (30) aufgebacht wird, vorzugsweise gepresst oder kaschiert.

16. Verwendung eines Verbundmaterials (1, 2, 3) nach einem der Ansprüche 1 bis 11 als Hitze-, Brand- und/oder Rauchschutzmaterial, insbesondere für elektrische Geräte.
